(19)

Europäisches Patentamt
European Patent Office
Office européen des brevets

(11)  **EP 4 670 841 A1**

(12)  **EUROPEAN PATENT APPLICATION**
published in accordance with Art. 153(4) EPC

(43) Date of publication:
**31.12.2025 Bulletin 2026/01**

(21) Application number: **24908349.4**

(22) Date of filing: **18.12.2024**

(51) International Patent Classification (IPC):
**B01J 23/00** (2006.01)     **B01J 37/02** (2006.01)
**B01J 35/60** (2024.01)     **C01B 3/26** (2006.01)

(52) Cooperative Patent Classification (CPC):
**B01J 23/00; B01J 35/60; B01J 37/02; C01B 3/26;**
**Y02P 20/52**

(86) International application number:
**PCT/KR2024/097115**

(87) International publication number:
**WO 2025/136045 (26.06.2025 Gazette 2025/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.12.2023 KR 20230184291**
            **17.12.2024 KR 20240188464**

(71) Applicant: **LG Chem, Ltd.**
            **Seoul 07336 (KR)**

(72) Inventors:
   • **CHO, Jun Yeon**
     **Daejeon 34122 (KR)**
   • **KIM, Sangjin**
     **Daejeon 34122 (KR)**

   • **KIM, Sojin**
     **Daejeon 34122 (KR)**
   • **KIM, Suji**
     **Daejeon 34122 (KR)**
   • **KIM, Yongseon**
     **Daejeon 34122 (KR)**
   • **BYUN, Wonbae**
     **Daejeon 34122 (KR)**
   • **CHOI, Jae Soon**
     **Daejeon 34122 (KR)**
   • **CHOI, Jun Seon**
     **Daejeon 34122 (KR)**
   • **CHOI, Hyun A**
     **Daejeon 34122 (KR)**

(74) Representative: **Goddar, Heinz J.**
            **Boehmert & Boehmert**
            **Anwaltspartnerschaft mbB**
            **Pettenkoferstrasse 22**
            **80336 München (DE)**

(54)   **CATALYST FOR METHANE REFORMING AND METHOD FOR PRODUCING SAME**

(57)   Provided is a catalyst for methane reforming and a method for preparing the catalyst for methane reforming, where the catalyst comprises a porous metal support, a first coating layer provided on the porous metal support and comprising a perovskite-based compound represented by Chemical Formula 1, and a second coating layer provided on the first coating layer and comprising a perovskite-based compound represented by Chemical Formula 2, and can prevent leaching of porous metal support components, thereby minimizing effects of the metal support components upon the catalyst:

[Chemical Formula 1]     $Sr_{1-a}A_aTiO_3$

[Chemical Formula 2]     $Sr_{1-x}A_xTi_{1-y}B_yO_{3-\delta}$

wherein all the variables are described herein.

**EP 4 670 841 A1**

【FIG. 1】

[Substitution energy depending on Ni, Cr concentration]

**Description**

[Cross-Reference to Related Applications]

The present application is a national stage entry under 35 U.S.C. §371 of International Application No. PCT/KR2024/097115 filed on December 18, 2024, which claims priority from Korean Patent Application No. 10-2023-0184291 filed on December 18, 2023 and Korean Patent Application No. 10-2024-0188464 filed on December 17, 2024, all the entire disclosures of which are incorporated herein by reference.

[Technical Field]

The present disclosure relates to a catalyst for methane reforming and a method for preparing the same.

[Background]

Many studies have been conducted about technologies of carbon dioxide conversion as a part of actions for reducing greenhouse gas caused by global warming. Carbon dioxide reforming, one of the technologies of carbon dioxide conversion, is a technology of allowing methane and carbon dioxide to react with each other to obtain syngas containing hydrogen and carbon monoxide. Such syngas is a highly valuable substance in terms of development as a raw material of various down-streams.

As a method for industrially producing such syngas ($H_2$/CO), reforming of natural gas may be classified into steam reforming, carbon dioxide ($CO_2$) reforming, catalytic partial oxidation, autothermal reforming and tri-reforming, as shown in the following Reaction Formula 1 to Reaction Formula 5:

[Reaction Formula 1]    $CH_4 + H_2O \rightarrow 3H_2 + CO$ $\triangle H = 226$ kJ/mol

[Reaction Formula 2]    $CH_4 + CO_2 \rightarrow 2H_2 + 2CO$ $\triangle H = 261$ kJ/mol

[Reaction Formula 3]    $CH_4 + 0.5O_2 \rightarrow 2H_2 + CO$ $\triangle H = -44$ kJ/mol

[Reaction Formula 4]    Autothermal reforming: Reaction Formula 1 + Reaction Formula 3

[Reaction Formula 5]    Tri-reforming: Reaction Formula 1 + Reaction Formula 2 + Reaction Formula 3

Meanwhile, various types of catalysts may be used for reforming activity in reforming processes. Among such catalysts, when a noble metal catalyst is used in a reforming process, there is an advantage in that high efficiency of conversion of hydrogen from natural gas is obtained, but there is a problem in that cost-efficiency is degraded due to the high cost of noble metal catalyst.

Therefore, a nickel catalyst has been used frequently in a reforming process since it provides high hydrogen conversion efficiency and is relatively cheap. However, in this case, there is a problem in that the nickel catalyst is inactivated due to carbon produced essentially on the surface of the nickel catalyst.

Therefore, there is a need for developing a catalyst having resistance against carbon deposition and applicable effectively to a methane reforming process.

[References]

(Patent Document) Korean Patent Laid-Open No. 10-2019-0076367

[Technical Problem]

The present disclosure is directed to providing a catalyst for methane reforming and a method for preparing the same.

[Technical Solution]

An exemplary embodiment of the present disclosure provides a catalyst for methane reforming, including: a porous metal support; a first coating layer provided on the porous metal support and including a perovskite-based compound represented by the following Chemical Formula 1; and a second coating layer provided on the first coating layer and including a perovskite-based compound represented by the following Chemical Formula 2.

Another exemplary embodiment of the present disclosure provides a method for preparing a catalyst for methane reforming, including: a first coating step in which a porous metal support is coated with a first coating solution to form a first coating layer; and a second coating step in which a second coating solution is coated on the first coating layer to form a second coating layer, wherein the first coating layer includes a compound represented by the following Chemical Formula 1, and the second coating layer includes a compound represented by the following Chemical Formula 2:

[Chemical Formula 1] $\qquad Sr_{1-a}A_aTiO_3$

[Chemical Formula 2] $\qquad Sr_{1-x}A_xT_{i1-y}B_yO_{3-\delta}$

wherein A is selected from the group consisting of Y, Sc, La and lanthanide-series elements,
B is Ni, Co, Fe, Mn, Cr, Mo, Ru or Rh,
a is a real number larger than 0 and less than 1,
x is a real number equal to or larger than 0 and less than 1,
y is a real number larger than 0 and less than 1, and
$\delta$ is a real number larger than 0 and less than 1.

[Advantageous Effects]

A catalyst for methane reforming according to an exemplary embodiment of the present disclosure can prevent leaching of porous metal support components, thereby minimizing effects of the metal support components upon the catalyst.

A catalyst for methane reforming according to an exemplary embodiment of the present disclosure can prevent a carbon deposition phenomenon, thereby providing increased catalyst life.

A method for preparing a catalyst for methane reforming according to an exemplary embodiment of the present disclosure can provide a catalyst for methane reforming having excellent performance. In other words, a catalyst for methane reforming obtained by the method for preparing a catalyst for methane reforming according to an exemplary embodiment of the present disclosure can minimize effects of the porous metal support to prevent a carbon deposition phenomenon.

[Brief Description of Drawings]

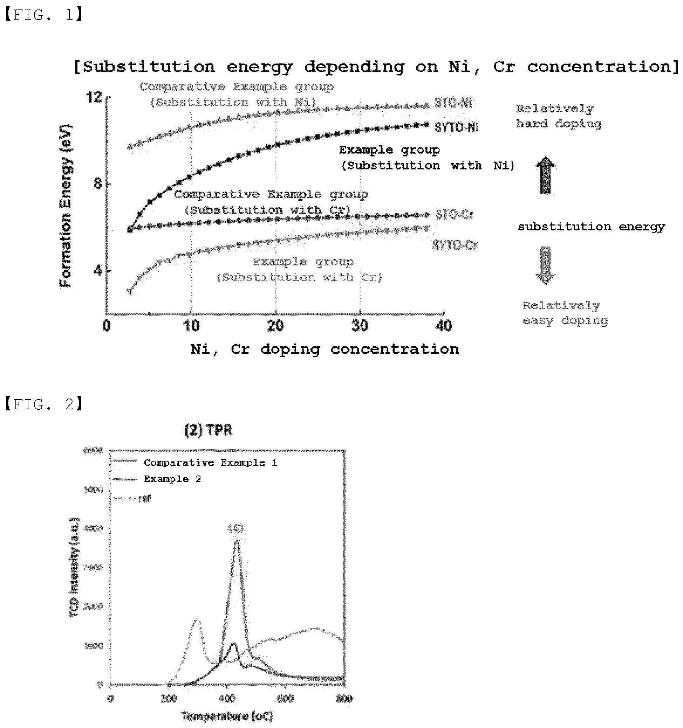

FIG. 1 and FIG. 2 respectively show a graph illustrating the results of Test Examples.

[Detailed Description]

Hereinafter, the present disclosure will be explained in more detail.

Throughout the present specification, when a certain member is described to be located "on" another member, this includes not only the case where the member is in contact with said another member but also the case where another member exists between the two members.

Throughout the present specification, when a part is described to "include" a component, this does not exclude the presence of another component but rather implies that further components may be included, unless the context specifically states otherwise.

<Catalyst for methane reforming>

A catalyst for methane reforming according to an exemplary embodiment of the present disclosure is characterized by including: a porous metal support; a first coating layer provided on the porous metal support; and a second coating layer provided on the first coating layer. In addition, the catalyst for methane reforming is characterized in that the first coating layer and the second coating layer include a perovskite-based compound represented by Chemical Formula 1 and a perovskite-based compound represented by Chemical Formula 2, respectively.

By virtue of the above-mentioned characteristics, the catalyst for methane reforming according to the present disclosure can prevent side reactions and a carbon deposition phenomenon of the porous metal support. In this manner, it is possible to increase methane reforming efficiency and reaction stability.

Particularly, the first coating layer can prevent a metal (Ni, Cr, etc.) as a main component of the porous metal support from being exposed on the surface in the form of a metal oxide ($NiO$, $Cr_2O_3$, etc.) under a long-time operation condition at a high temperature (750°C or higher), and can function as a buffer so that the ratio of components of the main catalyst represented by Chemical Formula 2 may not be changed by metal (Ni, Cr, etc.) migration at high temperature, thereby preventing a change of ratio of components of the main catalyst substance or catalyst phase change, and thus can improve the durability and performance of the catalyst.

In addition, the catalyst for methane reforming according to the present disclosure is characterized in that a in Chemical Formula 1 is larger than 0. In other words, the catalyst for methane reforming according to the present disclosure is characterized by including a perovskite-based compound containing a specific element (A) in the first coating layer. Since the catalyst includes such a specific element (A), it is possible to prevent side reactions caused by the porous metal support more effectively.

In an exemplary embodiment of the present disclosure, a in Chemical Formula 1 is a real number larger than 0 and less than 1, preferably a real number larger than 0 and equal to or less than 0.2, and more preferably a real number larger than 0 and equal to or less than 0.1.

In an exemplary embodiment of the present disclosure, y in Chemical Formula 2 is a real number larger than 0 and less than 1, preferably a real number larger than 0 and less than 0.9, more preferably a real number larger than 0 and less than 0.7, even more preferably a real number larger than 0 and less than 0.5, and most preferably a real number larger than 0 and less than 0.3.

In an exemplary embodiment of the present disclosure, Chemical Formula 2 may be represented by the following Chemical Formula 3 or 4:

[Chemical Formula 3] $\quad SrTi_{1-y}B_yO_{3-\delta}$

[Chemical Formula 4] $\quad Sr_{1-x}Y_xTi_{1-y}B_yO_{3-\delta}$

wherein B is Ni or Ru,
x is a real number larger than 0 and less than 1,
y is a real number larger than 0 and less than 0.3, and
$\delta$ is a real number larger than 0 and less than 1.

In an exemplary embodiment of the present disclosure, the porous metal support may be a material capable of maintaining thermal stability at a high temperature of 800°C or higher.

In an exemplary embodiment of the present disclosure, the porous metal support may be metal foam containing NiFeCrAl or NiCrAl.

The porous metal support is a support having various shapes, has a low heat capacity and excellent heat transferability and can be molded into a desired shape and used. There is no particular limitation in the shape, size, etc. of the porous metal support.

In an exemplary embodiment of the present disclosure, the porous metal support may have a porosity of 10-99%.

Preferably, the porous metal support may have a porosity of 50% or more, 60% or more, 70% or more, or 80% or more, and 98% or less, 97% or less, or 96% or less. When the porous metal support has a porosity of less than 10%, it has a reduced specific surface area on which a catalyst may be coated, and thus it is difficult to provide desired catalytic activity. On the other hand, when the porous metal support has a porosity of larger than 99%, it has low strength and is difficult to be used as a catalyst for a process.

In an exemplary embodiment of the present disclosure, the porous metal support may have an average cell size of 400-2,000 $\mu$m.

Preferably, the porous metal support may have an average cell size of 410 $\mu$m or more, 430 $\mu$m or more, or 450 $\mu$m or more, and 1,900 $\mu$m or less, 1,700 $\mu$m or less, or 1,500 $\mu$m or less.

When the porous metal support has an average cell size of less than 400 $\mu$m, it is difficult to carry out coating with a precursor solution. On the other hand, when the porous metal support has an average cell size of larger than 2,000 $\mu$m, it has a reduced surface area on which a catalyst may be coated, which is disadvantageous in terms of process and is not preferred.

The porous metal support may be prepared suitably by those skilled in the art through a method known in the art considering the materials, cell size, porosity, etc. of the porous metal support.

According to an exemplary embodiment of the present disclosure, porous metal supports using various materials and having different cell sizes, etc. may be used, as shown in the following examples.

In an exemplary embodiment of the present disclosure, the catalyst for methane reforming may include the perovskite-based compound represented by Chemical Formula 1 in an amount of 1-10 wt% based on the total weight of the porous metal support.

Preferably, the catalyst for methane reforming may include the perovskite-based compound represented by Chemical Formula 1 in an amount of 1.25 wt% or more, or 1.5 wt% or more, and 9 wt% or less, or 8 wt% or less, based on the total weight of the porous metal support.

When the content of the perovskite-based compound represented by Chemical Formula 1 is larger than 10 wt%, it is not possible to carry out coating with the perovskite-based compound represented by Chemical Formula 2 with ease, and thus the resultant catalyst shows low activity as compared to the volume of the porous metal support undesirably. In addition, when the content of the perovskite-based compound represented by Chemical Formula 1 is less than 1 wt%, it is difficult to obtain effects resulting from the first coating layer.

In an exemplary embodiment of the present disclosure, the catalyst for methane reforming may include the perovskite-based compound represented by Chemical Formula 2 in an amount of 3-40 wt% based on the total weight of the catalyst for methane reforming.

Preferably, the catalyst for methane reforming may include the perovskite-based compound represented by Chemical Formula 2 in an amount of 5 wt% or more, 6 wt% or more, or 7 wt% or more, and 38 wt% or less, 35 wt% or less, or 30 wt% or less, based on the total weight of the catalyst for methane reforming.

When the content of the perovskite-based compound represented by Chemical Formula 2 is less than 3 wt% based on the total weight of the catalyst for methane reforming, the resultant catalyst has a relatively smaller number of active spots on the catalyst surface, resulting in degradation of reactivity undesirably. In addition, when the content of the perovskite-based compound represented by Chemical Formula 2 is larger than 40 wt%, a relatively larger amount of catalyst components is present as compared to the porous metal support, thereby making it difficult to retain the pore structure and to accomplish binding of catalyst components with the porous metal support, resulting in degradation of benefits of methane reforming reaction.

In an exemplary embodiment of the present disclosure, the weight ratio of the perovskite-based compound of Chemical Formula 1 contained in the first coating layer to the perovskite-based compound of Chemical Formula 2 contained in the second coating layer may be between 1 : 1 and 1 : 20, and particularly between 1 : 1.1 and 1 : 15. When the above-defined weight ratio is not satisfied, the catalyst may have low activity as compared to the volume of the porous metal support undesirably.

In an exemplary embodiment of the present disclosure, the first coating layer may be provided on the whole surface of the porous metal support.

In an exemplary embodiment of the present disclosure, the surface of the catalyst for methane reforming may at least partially have bump shapes. Such bump shapes may be spherical shapes, oval shapes or a combination thereof, but are not limited thereto.

In an exemplary embodiment of the present disclosure, the first coating layer may function to fix the second coating layer on the porous metal support. In addition, the second coating layer may be present on the first coating layer in the form of bump shapes. In this manner, it is possible to increase the reactive surface area of the catalyst and to improve the performance of methane reforming reaction.

In an exemplary embodiment of the present disclosure, the catalyst for methane reforming may be applied to steam reforming, carbon dioxide ($CO_2$) reforming, catalytic partial oxidation, autothermal reforming, or tri-reforming or mixed reforming, and there is no particular limitation in the methane reforming process.

<Method for preparing catalyst for methane reforming>

A method for preparing a catalyst for methane reforming according to an exemplary embodiment of the present disclosure is characterized by including a first coating step of forming a first coating layer and a second coating step of forming a second coating layer. In addition, the method for preparing a catalyst for methane reforming according to an exemplary embodiment of the present disclosure is also characterized in that the first coating layer and the second coating layer include a perovskite-based compound represented by Chemical Formula 1 and a perovskite-based compound represented by Chemical Formula 2, respectively.

The method for preparing a catalyst for methane reforming according to an exemplary embodiment of the present disclosure can provide the catalyst according to the present disclosure. In other words, the method can provide a catalyst for methane reforming having excellent performance.

With reference to preparation of a catalyst containing a perovskite-based compound, there are known a citric acid process, Pechini process, high-temperature firing process, polymerization complex process, freeze drying process, coprecipitation process, sol-gel process, etc. In general, a citric process or Pechini process may be used frequently.

Particularly, a known citric acid process includes adding citric acid to prepare a gel-like amorphous metal complex, and drying and firing the metal complex to obtain a perovskite catalyst (Appl. Catal. B: Environ., 24 (2000) 193-205).

The method for preparing a catalyst for methane reforming according to an exemplary embodiment of the present disclosure may further include a step of preparing a first coating solution. The step of preparing a first coating solution may include: a solution preparing step in which a first metal precursor solution containing a strontium (Sr) precursor and a titanium (Ti) precursor is prepared; and a pH controlling step in which pH of the first metal precursor solution is controlled to pH 1-5, and preferably pH 1-3. When the first metal precursor solution has a pH higher than 5, precipitates are formed, and thus a desired shape of catalyst cannot be obtained after firing.

In addition, in an exemplary embodiment of the present disclosure, the pH controlling step may be carried out by adding urea to the metal precursor solution.

The method for preparing a catalyst for methane reforming according to an exemplary embodiment of the present disclosure may further include a step of preparing a second coating solution. The step of preparing a second coating solution may include a solution preparing step of preparing a second metal precursor solution containing a strontium (Sr) precursor and a nickel (Ni) precursor.

In an exemplary embodiment of the present disclosure, each of the first metal precursor solution and the second metal precursor solution may further include a titanium precursor solution.

Each of the first metal precursor solution and the second metal precursor solution may be applied in the form of sol or gel. In addition, when the first metal precursor solution includes the inorganic oxide, it may be provided in the form of sol or gel of a solution containing a precursor of inorganic oxide.

In an exemplary embodiment of the present disclosure, metal precursors contained in the first metal precursor solution and the second metal precursor solution are not particularly limited, and ammonium salts, nitrates, carbonates, chlorides, lactates, hydroxides, organic acid salts or oxides of the metal elements, or a mixture thereof may be used.

In an exemplary embodiment of the present disclosure, each of the first metal precursor solution and the second metal precursor solution may independently further include a solvent, wherein the solvent may be any solvent known to those skilled in the art with no particular limitation.

In the method for preparing a catalyst for methane reforming according to an exemplary embodiment of the present disclosure, the porous metal support, perovskite-based compound represented by Chemical Formula 1, perovskite-based compound represented by Chemical Formula 2, etc. are the same as described above.

The method for preparing a catalyst for methane reforming according to an exemplary embodiment of the present disclosure includes the steps of: coating the first coting solution on the porous metal support and carrying out a first heat treatment process to obtain a catalyst precursor having a first coating layer; and coating the second coating solution on the catalyst precursor having the first coating layer and carrying out a second heat treatment process to obtain a catalyst having a second coating layer.

The first coating solution and the second coating solution may be coated by using a method known to those skilled in the art, such as dip coating, wash coating, or the like, but are not limited thereto.

Each of the first heat treatment process and the second heat treatment process may independently include a drying step and a firing step. The drying step may be carried out at a temperature of 50-150°C for 1-48 hours, or at a temperature of 60-100°C for 5-36 hours, but is not limited thereto.

The firing step may be carried out at a temperature of 350-1,200°C for 1-10 hours under the atmosphere of air, or at a temperature of 500-1,000°C for 1.5-8 hours under the atmosphere of air, but is not limited thereto. When the firing step is carried out at a temperature of lower than 350°C, a perovskite phase cannot be formed properly. When the firing step is carried out at a temperature of higher than 1,200°C, the porous metal support may undergo degradation of durability undesirably.

In an exemplary embodiment of the present disclosure, the method may further include a step of weighing the catalyst supported on the porous metal support, after carrying out the second heat treatment process. In addition, the second coating solution may be coated until a desired amount of catalyst is supported on the porous metal support by weighing the catalyst supported on the porous metal support, and then the step of carrying out the second heat treatment process may be performed once to 10 times repeatedly.

The description of the catalyst for methane reforming according to the present disclosure may be applied to the method for preparing a catalyst for methane reforming according to an exemplary embodiment of the present disclosure, and vice versa.

[Mode for Invention]

Hereinafter, the present disclosure will be described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

**Examples**

**<Example 1>**

7

1) Preparation of first coating solution containing precursor of perovskite-based compound ($Sr_{0.92}Y_{0.08}TiO_3$)

A solution containing a precursor of perovskite-based compound ($Sr_{0.92}Y_{0.08}TiO_3$) was prepared through a known citric acid process, and strontium nitrate ($Sr(NO_3)_3H_2O$) was dissolved in distilled water together with citric acid and ethylene glycol (distilled water base solution). In addition, titanium isopropoxide ($Ti(OCH(CH_3)_2)_4$) was dissolved in ethanol (ethanol base solution).

Then, the two solutions were mixed with each other at 70°C, agitated for 3 hours and cooled to room temperature to be stored. Herein, the mixture had a pH of 0.3.

After that, urea was added to the mixture to control pH to a range of pH 1 to pH 5, thereby preparing a first coating solution.

2) Preparation of second coating solution containing precursor of perovskite-based compound ($SrTi_{0.97}Ni_{0.03}O_{3-\delta}$, $0<\delta<1$)

A solution containing a precursor of perovskite-based compound ($SrTi_{0.97}Ni_{0.03}O_{3-\delta}$) was prepared through a known citric acid process, and strontium nitrate ($Sr(NO_3)_3H_2O$) and nickel nitrate ($Ni(NO_3)_2$) were dissolved in distilled water together with citric acid and ethylene glycol (distilled water base solution). In addition, titanium isopropoxide ($Ti(OCH(CH_3)_2)_4$) was dissolved in ethanol (ethanol base solution).

Then, the two solutions were mixed with each other at 70°C, agitated for 3 hours and cooled to room temperature to be stored. Herein, Ni was contained in the mixture at 3 mol% based on Ti.

3) Preparation of catalyst for methane reforming

A porous metal support (NiCrAl, average cell size: 1,200 $\mu$m) was coated with the first coating solution through dip coating (formation of a first coating layer), drying was carried out at 70°C for 24 hours, and heat treatment was carried out at 300°C-900°C under the atmosphere of air for 3 hours.

Then, the porous metal support having the first coating layer was coated with the second coating solution through dip coating (formation of a second coating layer), drying was carried out at 70°C for 24 hours, and heat treatment was carried out at 300°C-900°C under the atmosphere of air for 3 hours. The dip coating of the second coating solution, drying and the heat treatment were repeated several times to obtain a catalyst including the porous metal support provided with the first coating layer ($Sr_{0.92}Y_{0.08}TiO_3$) and the second coating layer ($SrTi_{0.97}Ni_{0.03}O_{3-\delta}$, $0<\delta<1$) finally. Based on the total weight of the catalyst for methane reforming, the content of the first coating layer ($Sr_{0.92}Y_{0.08}TiO_3$) was 6 wt%. In addition, the content of the perovskite-based compound represented by Chemical Formula 2 ($SrTi_{0.97}Ni_{0.03}O_{3-\delta}$, $0<\delta<1$) was 17 wt% based on the total weight of the catalyst for methane reforming.

### <Examples 2 to 7 and Comparative Examples 1 to 6>

Catalysts for methane reforming were obtained in the same manner as Example 1, except that each of the perovskite-based compounds used in the first coating solution and the second coating solution used in Example 1 was changed as shown in the following Table 1.

[Table 1]

| No. | pH of first coating solution | Perovskite-based compound of first coating solution | Perovskite-based compound of second coating solution |
|---|---|---|---|
| Ex. 1 | 1 | $Sr_{0.92}Y_{0.03}TiO_3$ | $SrTi_{0.97}Ni_{0.03}O_{3-\delta}$ |
| Ex. 2 | 3 | $Sr_{0.92}Y_{0.08}TiO_3$ | $SrTi_{0.97}Ni_{0.03}O_{3-\delta}$ |
| Ex. 3 | 5 | $Sr_{0.92}Y_{0.08}TiO_3$ | $SrTi_{0.97}Ni_{0.03}O_{3-\delta}$ |
| Ex. 4 | 3 | $Sr_{0.92}Y_{0.03}TiO_3$ | $Sr_{0.92}Y_{0.08}Ti_{0.85}Ni_{0.15}O_{3-\delta}$ |
| Ex. 5 | 5 | $Sr_{0.92}Y_{0.03}TiO_3$ | $ST_{0.92}Y_{0.08}Ti_{0.85}Ni_{0.15}O_{3-\delta}$ |
| Ex. 6 | 3 | $Sr_{0.99}Y_{0.01}TiO_3$ | $ST_{0.92}Y_{0.08}Ti_{0.85}Ni_{0.15}O_{3-\delta}$ |
| Ex. 7 | 3 | $Sr_{0.9}Y_{0.1}TiO_3$ | $Sr_{0.92}Y_{0.08}Ti_{0.85}Ni_{0.15}O_{3-\delta}$ |
| Comp. Ex. 1 | 0.3 | - | $SrTi_{0.97}Ni_{0.03}O_{3-\delta}$ |
| Comp. Ex. 2 | 0.3 | - | $Sr_{0.92}Y_{0.08}Ti_{0.85}Ni_{0.15}O_{3-\delta}$ |

(continued)

| No. | pH of first coating solution | Perovskite-based compound of first coating solution | Perovskite-based compound of second coating solution |
|---|---|---|---|
| Comp. Ex. 3 | 1 | $SrTiO_3$ | $SrTi_{0.97}Ni_{0.03}O_{3-\delta}$ |
| Comp. Ex. 4 | 1 | $SrTiO_3$ | $Sr_{0.92}Y_{0.08}Ti_{0.85}N1_{0.15}O_{3-\delta}$ |
| Comp. Ex. 5 | 3 | $SrTiO_3$ | $Sr_{0.92}Y_{0.08}Ti_{0.85}Ni_{0.15}O_{3-\delta}$ |
| Comp. Ex. 6 | 5 | $SrTiO_3$ | $Sr_{0.92}Y_{0.08}Ti_{0.85}Ni_{0.15}O_{3-\delta}$ |

Although there is no instrument for determining an accurate value of $\delta$, $\delta$ has a real number value contained in a lattice along with substitution with Ni (with the proviso that $\delta$ is larger than 0 and less than 1).

**Test Examples**

**<Test Example 1> Evaluation of dry reforming of methane**

A fixed bed reaction system was introduced to carry out dry reforming of methane with each of the catalysts according to Examples 1 to 7 and Comparative Examples 1 to 6. Each of the catalysts (about 2 g) according to Examples and Comparative Examples was filled in a quartz tube reactor (inner diameter: 1/2 inch, length = 50 cm). First, reduction was carried out at 800°C under the condition of 10% $H_2/N_2$ for 1-2 hours, and then catalytic reaction was carried out for 28 hours.

Gas composition: $CH_4 : CO_2 : N_2 = 1 : 1.12 : 0.1$
Flow rate: GHSV (Gas Hour Space Velocity) = 900 hr$^{-1}$ (on the basis of $CH_4$)
Reaction temperature: 850°C
Reaction pressure: 6 bar

The product gas was analyzed in terms of composition by using gas chromatography (GC) to calculate a reaction conversion ratio after carrying out the reaction for 100 hours. The results are shown in the following Table 2.

Conversion ratio (Xi, %) = $[(Fi_{in} - Fi_{out})/Fi_{in}] \times 100$ (Fi = flow rate of i)

<GC Analysis Condition>

1) GC model: Agilent 6890
2) Oven temperature: 40°C/7min-90°C/5min-180°C/6min
3) Detector: Thermal conductivity detector (TCD), 250°C
4) Sample loop: 0.25 mL
5) Valve box Temperature: 150°C

In addition, a coke generation ratio was calculated by using the following Formula 1.
The results are shown in Table 2.

Coke %= (Weight of catalyst after reaction - Initial weight of catalyst) / (Weight of catalyst after reaction)     [Formula 1]

[Table 2]

| No. | CH$_4$ | CO$_2$ | H$_2$/CO | Coke (%) |
|---|---|---|---|---|
| | conversion ratio (%) | Conversion ratio (%) | | |
| Ex. 1 | 84 | 87 | 0.89 | 4.68 |
| Ex. 2 | 84 | 87 | 0.89 | 3.91 |

(continued)

| No. | CH$_4$ | CO$_2$ | H$_2$/CO | Coke (%) |
|---|---|---|---|---|
| | conversion ratio (%) | Conversion ratio (%) | | |
| Ex. 3 | 84 | 87 | 0.89 | 3.62 |
| Ex. 4 | 84 | 87 | 0.89 | 5.27 |
| Ex. 5 | 84 | 87 | 0.89 | 5.12 |
| Ex. 6 | 84 | 87 | 0.90 | 5.5 |
| Ex. 7 | 84 | 87 | 0.89 | 5.2 |
| Comp. Ex. 1 | 83 | 87 | 0.89 | 6.48 |
| Comp. Ex. 2 | 83 | 86 | 0.89 | 7.19 |
| Comp. Ex. 3 | 84 | 87 | 0.89 | 5.98 |
| Comp. Ex. 4 | 84 | 87 | 0.89 | 6.8 |
| Comp. Ex. 5 | 84 | 87 | 0.89 | 6.0 |
| Comp. Ex. 6 | 84 | 87 | 0.89 | 5.8 |

In Table 2, H$_2$/CO refers to a molar ratio of H$_2$ : CO in syngas. According to Table 2, all of Examples 1 to 7 and Comparative Examples 1 to 6 provide a high level of conversion ratio. However, it can be seen that Examples 1 to 7 provide a significantly lower coke generation ratio (%) after reaction as compared to Comparative Examples 1 to 6 under the same H$_2$/CO condition.

### \<Test Example 2\> Evaluation of substitution energy

As a material used in the first coating solution in preparing a catalyst, each of Sr$_{0.92}$Y$_{0.03}$TiO$_3$, Sr$_{0.99}$Y$_{0.01}$TiO$_3$, or Sr$_{0.9}$Y$_{0.1}$TiO$_3$ (see Examples 1 to 7) and SrTiO$_3$ (see Comparative Examples 1 to 6) under the condition free from pH modification treatment was determined in terms of density functional theory (DFT) upon the substitution with Ni or Cr to calculate substitution energy.

Ni(Cr) substitution energy in SrTiO$_3$ structure = E[SrTi$_{1-x}$Ni$_x$O$_3$] - E[SrTiO$_3$] + 1-x E[Ti] - x E[Ni(Cr)]

Ni(Cr) substitution energy in Sr$_{0.92}$Y$_{0.08}$TiO$_3$ structure = E [Sr$_{0.92}$Y$_{0.08}$Ti$_{1-x}$Ni$_x$O$_3$] - E[Sr$_{0.92}$Y$_{0.08}$TiO$_3$] + 1-x E[Ti] - x E[Ni(Cr)]

Ni(Cr) substitution energy in Sr$_{0.99}$Y$_{0.01}$TiO$_3$ structure = E[Sr$_{0.99}$Y$_{0.1}$Ti$_{1-x}$Ni$_x$O$_3$] - E[Sr$_{0.99}$Y$_{0.01}$TiO$_3$] + 1-x E[Ti] - x E[Ni(Cr)]

Ni(Cr) substitution energy in Sr$_{0.9}$Y$_{0.1}$TiO$_3$ structure = E[Sr$_{0.9}$Y$_{0.01}$Ti$_{1-x}$Ni$_x$O$_3$] - E[Sr$_{0.9}$Y$_{0.1}$TiO$_3$] + 1-x E[Ti] - x E[Ni(Cr)]

According to FIG. 1, it can be seen that a smaller energy is required in the case of Sr$_{0.92}$Y$_{0.08}$TiO$_3$, Sr$_{0.99}$Y$_{0.01}$TiO$_3$, or Sr$_{0.9}$Y$_{0.1}$TiO$_3$ structure (represented by SYTO) corresponding to Examples to substitute a Ti site with Ni or Cr, as compared to SrTiO$_3$ structure (represented by STO) corresponding to Comparative Examples. This suggests that in the case of a structure, such as Sr$_{0.92}$Y$_{0.08}$TiO$_3$, Sr$_{0.99}$Y$_{0.01}$TiO$_3$, or Sr$_{0.9}$Y$_{0.1}$TiO$_3$, satisfying Chemical Formula 1, substitution with Ni or Cr is easy, and the structure is more suitable for a buffer capable of keeping Ni or Cr derived from the porous metal support through substitution before it affects the main catalyst layer.

### \<Test Example 3\> Evaluation of catalytic reactivity

To evaluate catalytic activity, the catalyst according to each of Example 2 and Comparative Example 1 was subjected to a test of temperature programmed reduction (TPR). This test was carried out under the following conditions.

Instrument name: Belcat II (available from Microtrac)
Reaction gas: 3% H$_2$/Ar, 800°C (5°C /min)

For the purpose of analysis under the same condition of surface oxidation state, data of the first TPR analysis and TPR analysis after O$_2$ oxidation treatment are represented by (2)TPR in FIG. 2.

According to FIG. 2, the dotted line corresponding to ref. is a powder sample dried and fired with no coating with the second coating solution containing a perovskite-based compound represented by Chemical Formula 2.

For reference, in the case of Example 2 and Comparative Example 1, the coated portion was separated by physically shaking the catalyst off through hammering to make the surface state same as ref., and then the catalyst was sampled in a powder type and analyzed.

The results are shown in FIG. 2, and results of evaluating hydrogen consumption (i.e. inductively coupled plasma-optical emission spectrometry (ICP-OES) analysis results of the separated catalyst) are shown in the following Table 3.

[Table 3]

| No. | ICP (normalized to Sr) | | | | ICP | $H_2$TPR ($H_2$ consumption) |
|---|---|---|---|---|---|---|
| | Sr | Ti | Ni | Cr | Ni + Cr, | mmol/$g_{cat}$ |
| | | | | | mmol/$g_{cat}$ | |
| Comp. Ex. 1 | 1 | 0.898 | 0.042 | 0.085 | 0.673 | 0.646 |
| Ex. 2 | 1 | 0.946 | 0.033 | 0.041 | 0.398 | 0.359 |

In FIG. 2, the area of each peak is hydrogen consumption used for reduction of oxide. As compared to the ref. powder not coated on a porous metal support, both Example 2 and Comparative Example 1 show an increase in hydrogen consumption, but Example 2 shows a decrease in hydrogen consumption by 44% as compared to Comparative Example 1. Particularly, the peak at around 300-500°C in FIG. 2 corresponds to reduction of NiO, $Cr^{6+}$, and it can be seen that Comparative Example 1 is more affected by Ni or Cr derived from the porous metal support.

In addition, referring to the ICP-OES results in the above Table 3, the content of Ni and that of Cr of Comparative Example 1 significantly increase as compared to the input, starting from Ti/Ni = 0.95/0.03 of the main catalyst solution, while a smaller amount is detected and Ni content is maintained at a level of 3 mol% in Example 2. Particularly, when the ratio of Ni on the main catalyst increases, it is difficult to realize desired reactivity. Further, when the Ni content is excessive, large Ni particles are formed due to high-temperature sintering, which may result in a disadvantage of vulnerability to coke formation. Similarly, since substitution with Cr is easier as compared to substitution with Ni as shown in FIG. 1, it interrupts substitution with Ni or it occurs instead of substitution with Ni to form large Ni particles, which may result in a disadvantage of vulnerability to coke formation.

**Claims**

1.    A catalyst for methane reforming, comprising:

a porous metal support;
a first coating layer provided on the porous metal support and comprising a perovskite-based compound represented by Chemical Formula 1; and
a second coating layer provided on the first coating layer and comprising a perovskite-based compound represented by Chemical Formula 2:

[Chemical Formula 1]        $Sr_{1-a}A_aTiO_3$

[Chemical Formula 2]        $Sr_{1-x}A_xTi_{1-y}B_yO_{3-\delta}$

wherein A is selected from the group consisting of Y, Sc, La and lanthanide-series elements,
B is Ni, Co, Fe, Mn, Cr, Mo, Ru or Rh,
a is a real number larger than 0 and less than 1,
x is a real number equal to or larger than 0 and less than 1,
y is a real number larger than 0 and less than 1, and
$\delta$ is a real number larger than 0 and less than 1.

2.    The catalyst for methane reforming according to claim 1, wherein the porous metal support is metal foam comprising NiFeCrAl or NiCrAl.

3. The catalyst for methane reforming according to claim 1, which is applied to steam reforming, carbon dioxide ($CO_2$) reforming, catalytic partial oxidation, autothermal reforming, tri-reforming or a mixed reforming thereof.

4. The catalyst for methane reforming according to claim 1, wherein the porous metal support has a porosity of 10-99%.

5. The catalyst for methane reforming according to claim 1, wherein the porous metal support has an average cell size of 400-2,000 $\mu$m.

6. The catalyst for methane reforming according to claim 1, wherein the perovskite-based compound represented by Chemical Formula 1 is included in an amount of 1-10 wt% based on a total weight of the porous metal support.

7. The catalyst for methane reforming according to claim 1, wherein the perovskite-based compound represented by Chemical Formula 2 is included in an amount of 3-40 wt% based on a total weight of the catalyst.

8. A method for preparing a catalyst for methane reforming, comprising:

a first coating step: coating a porous metal support with a first coating solution to form a first coating layer; and
a second coating step: coating a second coating solution on the first coating layer to form a second coating layer, wherein the first coating layer comprises a compound represented by Chemical Formula 1, and the second coating layer comprises a compound represented by Chemical Formula 2:

[Chemical Formula 1] $\quad Sr_{1-a}A_aTiO_3$

[Chemical Formula 2] $\quad Sr_{1-x}A_xTi_{1-y}B_yO_{3-\delta}$

wherein A is selected from the group consisting of Y, Sc, La and lanthanide-series elements,
B is Ni, Co, Fe, Mn, Cr, Mo, Ru or Rh,
a is a real number larger than 0 and less than 1,
x is a real number equal to or larger than 0 and less than 1,
y is a real number larger than 0 and less than 1, and
$\delta$ is a real number larger than 0 and less than 1.

9. The method for preparing a catalyst for methane reforming according to claim 8, further comprising a step of preparing the first coating solution, which comprises:

a solution preparing step: preparing a first metal precursor solution containing a strontium (Sr) precursor and a titanium (Ti) precursor; and
a pH controlling step: controlling a pH of the first metal precursor solution to be 1-5.

10. The method for preparing a catalyst for methane reforming according to claim 9, wherein the pH controlling step is carried out by adding urea to the first metal precursor solution.

11. The method for preparing a catalyst for methane reforming according to claim 8, wherein the porous metal support is metal foam comprising NiFeCrAl or NiCrAl.

【FIG. 1】

[Substitution energy depending on Ni, Cr concentration]

【FIG. 2】

## INTERNATIONAL SEARCH REPORT

| International application No. |
|---|
| **PCT/KR2024/097115** |

**A. CLASSIFICATION OF SUBJECT MATTER**

**B01J 23/00**(2006.01)i; **B01J 37/02**(2006.01)i; **B01J 35/60**(2024.01)i; **C01B 3/26**(2006.01)i

According to International Patent Classification (IPC) or to both national classification and IPC

**B. FIELDS SEARCHED**

Minimum documentation searched (classification system followed by classification symbols)

B01J 23/00(2006.01); B01J 21/06(2006.01); C01B 32/50(2017.01); C01G 53/00(2006.01); H01M 8/0637(2016.01); H01M 8/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코팅(coating), 페로브스카이트(perovskite), 메탄개질촉매(methane reforming catalyst), 금속지지체(metal support)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0073076 A (LG CHEM, LTD.) 25 May 2023 (2023-05-25)<br>See claims 1-11; paragraphs [0069]-[0103]; and table 1. | 1-11 |
| Y | KWON, B. W. et al. The novel perovskite-type Ni-doped Sr0. 92Y0. 08TiO3 catalyst as a reforming biogas (CH4 + CO2) for H2 production. Applied Energy. 2018, vol. 227, pp. 213-219.<br>See abstract; and page 214. | 1-11 |
| A | KR 10-2152596 B1 (KOREA INSTITUTE OF SCIENCE AND TECHNOLOGY) 08 September 2020 (2020-09-08)<br>See claims 1-9. | 1-11 |
| A | JP 2009-263225 A (COMMISSARIAT A L`ENERGIE ATOMIQUE) 12 November 2009 (2009-11-12)<br>See claim 1. | 1-11 |
| A | KR 10-1457098 B1 (KOREA INSTITUTE OF SCIENCE AND TECHNOLOGY) 04 November 2014 (2014-11-04)<br>See claims 1-10. | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 April 2025** | **08 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/097115**

| Patent document cited in search report | | | Publication date (day/month/year) | Patent family member(s) | | | Publication date (day/month/year) |
|---|---|---|---|---|---|---|---|
| KR | 10-2023-0073076 | A | 25 May 2023 | CN | 116761674 | A | 15 September 2023 |
| | | | | EP | 4257236 | A1 | 11 October 2023 |
| | | | | JP | 2024-503472 | A | 25 January 2024 |
| | | | | US | 2024-0299924 | A1 | 12 September 2024 |
| | | | | WO | 2023-090585 | A1 | 25 May 2023 |
| KR | 10-2152596 | B1 | 08 September 2020 | KR | 10-2020-0002468 | A | 08 January 2020 |
| JP | 2009-263225 | A | 12 November 2009 | JP | 5607893 | B2 | 15 October 2014 |
| | | | | US | 2010-0015489 | A1 | 21 January 2010 |
| | | | | US | 8247113 | B2 | 21 August 2012 |
| KR | 10-1457098 | B1 | 04 November 2014 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2024097115 W
- KR 1020230184291
- KR 1020240188464
- KR 1020190076367

**Non-patent literature cited in the description**

- *Appl. Catal. B: Environ.*, 2000, vol. 24, 193-205